# EUROPÄISCHE PATENTSCHRIFT

(11) **EP 2 726 354 B1**
(45) Veröffentlichungstag und Bekanntmachung des Hinweises auf die Patenterteilung: **18.10.2017**
(21) Anmeldenummer: 12728989.0
(22) Anmeldetag: 11.06.2012
(51) Int. Cl.: F16H 61/02, B60W 30/192, B60W 10/113, B60W 10/02, B60W 10/06, F16H 61/688, F16H 3/00, B60W 30/18

(54) **VERFAHREN ZUM BETRIEB EINES KRAFTFAHRZEUGS**
METHOD FOR OPERATING A MOTOR VEHICLE
PROCÉDÉ PERMETTANT DE FAIRE FONCTIONNER UN VÉHICULE AUTOMOBILE

(30) Priorität: 30.06.2011 DE 102011106149
(43) Veröffentlichungstag der Anmeldung: 07.05.2014
(73) Patentinhaber: Volkswagen Aktiengesellschaft, 38440 Wolfsburg (DE)
(72) Erfinder: BOTHE, Edgar, 31224 Peine (DE); MÜLLER, Henning, 38518 Gifhorn (DE)
(86) Internationale Anmeldenummer: PCT/EP2012/002473
(87) Internationale Veröffentlichungsnummer: WO 2013/000539

(56) Entgegenhaltungen:
- EP-A1- 2 327 901
- DE-A1-102007 050 659
- DE-A1-102009 047 052
- US-A1- 2010 263 952

## Beschreibung

### Gebiet der Erfindung

Die Erfindung bezieht sich auf ein Verfahren zum Betrieb eines Kraftfahrzeugs mit einer Verbrennungskraftmaschine sowie einem zur Anwahl unterschiedlicher Gangstufen ausgelegten Getriebe, das eingangsseitig mittels wenigstens einer Kupplung mit einer Ausgangswelle der Verbrennungskraftmaschine und ausgangsseitig mit den Antriebsrädern des Kraftfahrzeugs gekoppelt ist,
wobei in einem Rollbetriebs des Kraftfahrzeugs, in dem das Kraftfahrzeug mit ausgeschalteter Verbrennungskraftmaschine und geöffneter Kupplung antriebsfrei rollt, die Verbrennungskraftmaschine durch Schließen der Kupplung angeschleppt und das Kraftfahrzeug in einen Fahrbetrieb mit einer vorbestimmten Fahrgangstufe überführt wird.

### Stand der Technik

Derartige Verfahren zum Betrieb von Kraftfahrzeugen sind bekannt aus der DE 199 45 473 A1. Diese Druckschrift offenbart ein Hybridfahrzeug mit einer Verbrennungskraftmaschine und einer zusätzlichen elektrischen Maschine. Das bekannte Kraftfahrzeug ist insbesondere als Parallelhybrid ausgebildet. Die Kurbelwelle der Verbrennungskraftmaschine ist über eine zentrale Anfahrkupplung mit einer Vorgelegewelle eines Wechselgetriebes gekoppelt. Die Ausgangswelle des Wechselgetriebes ist in üblicher Weise mit dem weiteren Abtriebsstrang, d.h. insbesondere den Antriebsrädern gekoppelt. Auch die elektrische Maschine ist mit der Ausgangswelle des Getriebes gekoppelt und zwar wahlweise jeweils über eine Kupplung direkt oder über die Vorgelegewelle. Die genannte Druckschrift offenbart verschiedene Verfahrensvarianten zum Betrieb des Kraftfahrzeugs. Insbesondere wird ein Schleppstart der Verbrennungskraftmaschine aus dem Rekuperationsbetrieb, bei dem die Verbrennungskraftmaschine abgeschaltet und die Anfahrkupplung geöffnet ist, offenbart. Dabei wird von den Antriebsrädern kinetische Energie in die Ausgangswelle des Getriebes und von dort über ein ausgewähltes Gangradpaar in die Vorgelegewelle und auf die Kurbelwelle der Brennkraftmaschine geleitet. Diese wird dadurch entgegen ihrem Schleppmoment allein durch die kinetische Energie des rollenden Kraftfahrzeugs gestartet. Die Weiterfahrt des Kraftfahrzeugs erfolgt dann verbrennungsmotorisch in derjenigen Fahrgangstufe, die durch das vorgenannte, ausgewählte Gangradpaar im Getriebe eingelegt ist.

Aus der dem Oberbegriff entsprechenden DE 10 2007 050 659 A1 ist ein Verfahren bekannt, wo während der elektrischen Fahrt die Verbrennungskraftmaschine über die elektrische Maschine gestartet wird. Das Fahrzeug weist ein Doppelkupplungsgetriebe mit zwei Teilgetrieben auf, wobei die elektrische Maschine lediglich mit dem ersten Teilgetriebe verbunden ist. Bei der elektrischen Fahrt wird das Fahrzeug dann immer über das erste Teilgetriebe angetrieben. Zum Starten der Verbrennungskraftmaschine wird in dem zweiten Teilgetriebe ein beliebiger Gang eingelegt und durch Schließen der zugehörigen Kupplung die Verbrennungskraftmaschine angeschleppt. Weiterhin erwähnt das Dokument auch die Möglichkeit in dem zweiten Teilgetriebe ein geschwindigkeitsabhängigen Gang einzulegen. Falls dieser Gang niedriger als der Gang im ersten Teilgetriebe ist, mit dem aktuell mittels der elektrischen Maschine gefahren wird, wird die Verbrennungskraftmaschine durch Schließen der Kupplung des ersten Teilgetriebes angeschleppt. Eine Wahl des Ganges in dem ersten Teilgetriebe ist dabei nicht vorgesehen, es wird immer der aktuell eingelegte Gang für die elektrische Fahrt verwendet. Somit ist die Wahl des passenden Ganges eingeschränkt und kann lediglich bei einer Hälfte der Gänge durchgeführt werden, was zu einem nur begrenzten Fahrkomfort führen kann. Weiterhin ist aus der US 2010/263952 A1 ein Verfahren zum Starten einer Verbrennungskraftmaschine eines Hybridfahrzeugs mit einem Doppelkupplungsgetriebe bekannt, wo während der elektrischen Fahrt die Verbrennungskraftmaschine mit kinetischer Energie der Getriebeeingangswellen gestartet wird. Die Getriebeeingangswellen werden während der elektrischen Fahrt mitgeschleppt, indem in beiden Teilgetrieben je ein Gang eingelegt ist und beide Kupplungen geöffnet sind. Zum Start der Verbrennungskraftmaschine werden dann in beiden Teilgetrieben die Gänge rausgelegt und beide Kupplungen werden geschlossen. Somit wird der Antriebsstrang beim Anschleppen der Verbrennungskraftmaschine getrennt und die abrupte Drehzahlsenkung kann nicht zu Komforteinbußen führen. Nachteilig dabei ist die Verwendbarkeit des Verfahrens lediglich bei größeren Fahrgeschwindigkeiten wegen der kleinen Massenträgheit der Getriebeeingangswellen.
Die elektrische Maschine kann dabei zur Unterstützung des Anschleppvorgangs der Verbrennungskraftmaschine zugeschaltet werden, was aus Komfortgründen in der Regel auch erforderlich sein wird. Das Anschleppen der Verbrennungskraftmaschine ist nämlich mit einem erheblichen Momentensprung verbunden, da die Drehzahl der Verbrennungskraftmaschine entgegen deren Schleppmoment in kürzester Zeit vom Stillstand auf die Fahrdrehzahl erhöht werden muss. Dieser Momenteneinbruch, der sich durch den gesamten Abtriebsstrang bis zu den Antriebsrädern fortsetzt, wird von den Fahrzeuginsassen als unangenehmes Rucken empfunden. Zur Abmilderung dieses Ruckens ist es daher erforderlich, zum Anschleppen zusätzliches Moment von der elektrischen Maschine einzuleiten, um den Momenteneinbruch an den Antriebsrädern zu reduzieren.
Nachteilig ist, dass dieses bekannte Verfahren, welches für den Einsatz bei Hybridfahrzeugen mit entsprechend ausgelegter elektrischer Maschine durchaus geeignet ist, bei konventionellen Fahrzeugen nur mit nicht hinnehmbaren Komforteinbußen durchführbar ist. Eine aus Energiespargründen wünschenswerte Start/Stopp-Automatik ist bei konventionellen Fahrzeugen daher auf den Start der Verbrennungskraftmaschine mittels elektrischen Anlassers angewiesen. Dies ist sowohl im Hinblick auf die Beanspruchung des Anlassers als auch im Hinblick auf die üblicherweise geringe Zyklusfestigkeit von Spannungsversorgungen (Batterien) konventioneller Fahrzeuge nachteilig.

### Aufgabenstellung

Es ist die Aufgabe der vorliegenden Erfindung, ein Verfahren zum Betrieb eines konventionellen Kraftfahrzeugs zur Verfügung zu stellen, welches einen komfortablen Schleppstart der Verbrennungskraftmaschine ermöglicht.

### Darlegung der Erfindung

Diese Aufgabe wird in Verbindung mit den Merkmalen des Oberbegriffs von Anspruch 1 durch dessen kennzeichnenden Merkmale gelöst, wobei zum Anschleppen der Verbrennungskraftmaschine die Gangstufe niedrigster Übersetzung desjenigen Teilgetriebes, welches die vorgesehene Fahrgangstufe nicht enthält, als Anschleppgangstufe eingelegt und die zugeordnete Getriebekupplung geschlossen wird, während die Getriebekupplung des die vorgesehene Fahrgangstufe enthaltenden Teilgetriebes geöffnet ist.

Vorteilhafte Ausgestaltungen der Erfindung sind Gegenstand der abhängigen Patentansprüche.

Die Erfindung setzt eine Ausgestaltung des Getriebes als Doppelkupplungsgetriebe voraus. Doppelkupplungsgetriebe sind dem Fachmann allgemein bekannt. Sie zeichnen sich durch zwei Teilgetriebe aus, die beide mit der Getriebeausgangswelle verbunden und über jeweils eine Getriebekupplung mit der Getriebeeingangswelle gekoppelt sind. Die Aufteilung der Fahrgangstufen zwischen den Teilgetrieben erfolgt typischerweise so, dass in einem ersten Teilgetriebe die ungeraden und in dem zweiten Teilgetriebe die geraden Fahrgangstufen angeordnet sind. Die Rückwärtsfahrgangstufe ist üblicherweise einem der beiden Teilgetriebe zugeordnet. Um von einer aktuellen Fahrgangstufe, über die die Getriebeeingangswelle mit der Getriebeausgangswelle während eines aktuellen Fahrbetriebs momentübertragend verbunden ist, eine Fahrgangstufe hoch oder herunter zu schalten, um den Fahrbetrieb in der entsprechenden vorgesehenen Fahrgangstufe fortzusetzen, wird diese vorgesehene Fahrgangstufe, in dem die aktuelle Fahrgangstufe nicht enthaltenden Teilgetriebe eingelegt, entfaltet jedoch aufgrund der fehlenden momentenübertragenden Verbindung zur Getriebeeingangswelle noch keine Wirkung. Durch geeignetes Kupplungsmanagement der beiden Getriebekupplungen wird das von der Getriebeeingangswelle eingeleitete Moment von dem einen auf das andere Teilgetriebe und somit von der aktuellen auf die vorgesehene Fahrgangstufe überblendet. Der Momentenübertrag erfolgt weitestgehend zugkraftunterbrechungsfrei, d.h. ruckfrei.

Die vorliegende Erfindung sieht die Verwendung eines solchen Doppelkupplungsgetriebes zum Anschleppen der mit der Getriebeeingangswelle verbundenen Verbrennungskraftmaschine vor. Das erfindungsgemäße Verfahren geht dabei aus von einem Rollbetrieb des Kraftfahrzeugs. Der Rollbetrieb kann beispielsweise im Rahmen einer Start/Stopp-Automatik eingeleitet werden, wenn die Steuerung des Kraftfahrzeugs keinen positiven Beschleunigungsbedarf feststellt. Beispielsweise kann dies der Fall sein, wenn ein Kraftfahrzeug ohne Betätigung des Gaspedals auf eine rote Ampel zufährt. Im Rollbetrieb ist die Verbrennungskraftmaschine beispielsweise aus Energiespargründen abgeschaltet; damit ihr Schleppmoment das Kraftfahrzeug nicht abbremst, sind zusätzlich beide Getriebekupplungen geöffnet. Zum Starten der Verbrennungskraftmaschine wird dann jedoch nicht wie bei dem bekannten Verfahren die Verbindung zwischen Antriebsrädern und Verbrennungskraftmaschine über die für die Weiterfahrt vorgesehene Fahrgangstufe durch Schließen der entsprechenden Kupplung hergestellt. Vielmehr wird in dem für die Weiterfahrt nicht benötigten Teilgetriebe dessen höchster Gang, d.h. der Gang mit der niedrigsten Übersetzung, eingelegt und die momentenübertragende Verbindung zwischen Antriebsrädern und Verbrennungskraftmaschine über diese Anschleppfahrgangstufe hergestellt. Erst nach dem Starten der Verbrennungskraftmaschine wird durch geeignetes Kupplungsmanagement die zur Weiterfahrt vorgesehene Fahrgangsstufe auf dem Weg einer Zug-Rückschaltung eingestellt.
Dieser Erfindung liegt die Erkenntnis zugrunde, dass die für den Start üblicher Verbrennungskraftmaschinen erforderlichen Startdrehzahlen mit 60 bis 200 U/min deutlich unter den Leerlaufdrehzahlen von ca. 500 bis 900 U/min oder gar den Fahrdrehzahlen von über 1000 U/min liegen. Daraus folgt, dass es nicht erforderlich ist, die Verbrennungskraftmaschine mit der vorgesehenen Fahrgangstufe, in der die Getriebeeingangswelle aufgrund des von den rollenden Antriebsrädern über die Getriebeausgangswelle eingetragenen Momentes in etwa mit der vorgesehenen Fahrgangdrehzahl dreht, anzuschleppen. Vielmehr ist eine sehr viel geringere Drehzahl, wie sie mit einer niedrigeren Übersetzung als die der Fahrgangstufe realisiert werden kann, zum Start der Verbrennungskraftmaschine ausreichend. Erfindungsgemäß ist daher vorgesehen, zum Anschleppen der Verbrennungskraftmaschine dasjenige Teilgetriebe zu verwenden, welches die vorgesehene Fahrgangstufe nicht enthält, und dort die niedrigste mögliche Übersetzung zu wählen, d.h. die höchste in dem Teilgetriebe vorhandene Fahrgangstufe einzulegen. Folglich wird die Verbrennungskraftmaschine allein aufgrund der kinetischen Energie des Kraftfahrzeuges mit niedriger Startdrehzahl angeschleppt, sodass es an den Antriebsrädern zu keinem erheblichen Momentensprung kommt, der im Fahrzeug als Rucken unangenehm wahrgenommen würde.
Vorzugsweise wird nach dem Anschleppen der Verbrennungskraftmaschine deren Moment durch aufeinander abgestimmtes Öffnen und Schließen der Getriebekupplungen von dem die Anschleppgangstufe enthaltenden Teilgetriebe auf das die vorgesehene Fahrgangstufe enthaltende Teilgetriebe überführt. Dies kann gemäß einer herkömmlichen Zug-Rückschaltung erfolgen, wie sie dem Fachmann von Doppelkupplungsgetrieben her bekannt ist.
Detailliert ausgeführt umfasst ein bevorzugtes Verfahren gem. der vorliegenden Erfindung die folgenden Schritte:
- Betreiben des Kraftfahrzeugs in einem verbrennungsmotorischen Fahrbetrieb, wobei eine aktuelle Fahrgangstufe eingelegt, die Getriebekupplung des die aktuelle Fahrgangstufe enthaltenden Teilgetriebes geschlossen und die Getriebekupplung des anderen Teilgetriebes geöffnet ist,
- Einleiten des Rollbetriebs durch Öffnen der Getriebekupplung des die aktuelle Fahrgangstufe enthaltenden Teilgetriebes und Abschalten der Verbrennungskraftmaschine,
- Betreiben des Kraftfahrzeugs im Rollbetrieb bis zum Empfang eines Betriebsumschaltsignals,
- Nach Empfang des Betriebsumschaltsignals: Vorbereiten des Getriebes, sodass in dem einen der Teilgetriebe die vorgesehene Fahrgangstufe eingelegt oder künftig einlegbar ist und in dem anderen der Teilgetriebe dessen Fahrgangstufe niedrigster Übersetzung als Anschleppgangstufe eingelegt ist,
- Schließen der Getriebekupplung des die Anschleppgangstufe enthaltenden Teilgetriebes zum Starten der Verbrennungskraftmaschine,
- Aufeinander abgestimmtes Öffnen der Getriebekupplung des die Anschleppgangstufe enthaltenden Teilgetriebes und Schließen der Getriebekupplung des die eingelegte vorgesehene Fahrgangstufe enthaltenden Teilgetriebes.

Das Betriebsumschaltsignal, welches, ausgehend vom Rollbetrieb, den Übergang zum verbrennungsmotorischen Fahrbetrieb einleitet, kann auf unterschiedlichste Weise ausgestaltet sein. Beispielsweise kann es aufgrund vorgegebener Messungen und Berechnungen von einer zentralen Steuerung ausgegeben werden. Bei einer anderen Ausführungsform ist vorgesehen, dass eine Betätigung des Gaspedals als Betriebsumschaltsignal interpretiert wird.

Das Kupplungsmanagement nach dem Starten der Verbrennungskraftmaschine kann auf unterschiedliche Weise erfolgen. Bevorzugt ist vorgesehen, dass die Getriebekupplung des die Anschleppgangstufe enthaltenden Teilgetriebes nach dem Starten der Verbrennungskraftmaschine schlupfend geöffnet und die Drehzahl der Verbrennungskraftmaschine mindestens bis zu einer ersten Synchrondrehzahl mit dem die Anschleppgangstufe enthaltenden Teilgetriebe erhöht wird. Die Verbrennungskraftmaschine wird somit nach ihrem Start noch von dem drehenden Start-Teilgetriebe "hochgezogen", wobei die zugeordnete Getriebekupplung langsam geöffnet wird, sodass beim Erreichen der Synchrondrehzahl, wenn es zu einem Vorzeichenwechsel der Momentenübertragung kommt, die Getriebekupplung weitestgehend geöffnet ist.

Bevorzugt ist weiter vorgesehen, dass nach dem Erreichen der Synchrondrehzahl die Getriebekupplung des die Anschleppgangstufe enthaltenden Teilgetriebes schlupfend geschlossen wird, sodass die Drehzahl der Verbrennungskraftmaschine auf eine zweite Synchrondrehzahl mit dem die vorgesehene Fahrgangstufe enthaltenden Teilgetriebe eingeregelt wird. Die bei geöffneter Getriebekupplung aus eigener Kraft weiter hochdrehende Verbrennungskraftmaschine wird somit durch die wieder schlupfend schließende Getriebekupplung "eingebremst", sodass der Drehzahlgradient allmählich abgebaut wird und die Drehzahl der Verbrennungskraftmaschine in etwa asymptotisch auf diejenige Drehzahl eingestellt wird, mit der das andere, d.h. das die vorgesehene Fahrgangstufe enthaltende Teilgetriebe dreht.

Weiter bevorzugt ist vorgesehen, dass nach Erreichen der zweiten Synchrondrehzahl die Getriebekupplung des die vorgesehene Fahrgangstufe enthaltenden Teilgetriebes abrupt geschlossen wird. Dies verursacht keinen Ruck, da die Relativdrehzahl zwischen der Verbrennungskraftmaschine und dem die vorgesehene Fahrgangstufe enthaltenden Teilgetriebe bei der zweiten Synchrondrehzahl Null ist. Natürlich ist es auch möglich, die Getriebekupplung langsam zu schließen. In diesem Zustand wird das Moment der Verbrennungskraftmaschine nun über die vorgesehene Fahrgangstufe an die Antriebsräder übertragen. Die Getriebekupplung des die Anschleppgangstufe enthaltenden Teilgetriebes befindet sich zu diesem Zeitpunkt in einem schlupfenden Betrieb.

Es ist bevorzugt vorgesehen, dass nach dem Schließen der Getriebekupplung des die vorgesehene Fahrgangstufe enthaltenden Teilgetriebes die Getriebekupplung des die Anschleppgangstufe enthaltenen Teilgetriebes schlupfend bis zur vollständigen Öffnung geöffnet wird. In diesem Zustand wird das Drehmoment von der Verbrennungskraftmaschine ausschließlich über die vorgesehene Fahrgangstufe an die Antriebsräder übertragen.

Es sind Fälle denkbar, in denen die Rollgeschwindigkeit des Kraftfahrzeugs so gering ist, dass die erfindungsgemäß am Getriebeeingang erzeugte Anschleppdrehzahl unterhalb der erforderlichen Startdrehzahl der Verbrennungskraftmaschine liegt. Bei einer Weiterbildung der Erfindung ist daher vorgesehen, dass im Fall, dass im Rollbetrieb des Kraftfahrzeugs dessen Rollgeschwindigkeit zu gering und/oder die Übersetzung der niedrigsten Gangstufe des die vorgesehene Fahrgangstufe nicht enthaltenden Teilgetriebes zu niedrig ist, um beim Anschleppen die Verbrennungskraftmaschine bis zu deren Mindeststartdrehzahl zu beschleunigen, die Gangstufe zweitniedrigster Übersetzung des die vorgesehene Fahrgangstufe nicht enthaltenden Teilgetriebes als Anschleppgangstufe verwendet wird. Dies bedeutet mit anderen Worten, dass im Fall, dass der höchste Gang des Start-Teilgetriebes zu groß ist, statt seiner der zweithöchste Gang desselben Teilgetriebes zum Anschleppen der Verbrennungskraftmaschine verwendet wird.

Alternativ zu dieser Ausweichmöglichkeit bei zu geringer Rollgeschwindigkeit kann in gleichgelagerten Fällen auch vorgesehen sein, dass die Verbrennungskraftmaschine bei geöffneter erster und zweiter Getriebekupplung mittels eines elektrischen Anlassers gestartet wird. Mit anderen Worten kann auch alternativ auf die herkömmliche Form des Startens der Verbrennungskraftmaschine mittels Anlassers zurückgegriffen werden. Diese Variante ist aufgrund der oben geschilderten nachteiligen Folgen für Anlasser und Spannungsversorgung zwar nicht bevorzugt; da der genannte Fall jedoch in der Praxis relativ selten eintreten sollte, ist diese Variante tolerierbar und zeitigt in der Praxis zumindest in der überwiegenden Anzahl der Fälle die erfindungsgemäßen Vorteile.

Weitere Merkmale und Vorteile der vorliegenden Erfindung ergeben sich aus der nachfolgenden, speziellen Beschreibung und den Zeichnungen.

### Kurze Beschreibung der Zeichnungen

Es zeigen:
- Figur 1:: eine schematische Darstellung des Momentenflusses in einem Doppelkupplungsgetriebes entsprechend dem erfindungsgemäßen Verfahren,
- Figur 2:: eine schematische Darstellung der Motordrehzahl im Rahmen des erfindungsgemäßen Verfahrens,
- Figur 3:: eine schematische Darstellung der Kupplungsmomente im Rahmen des erfindungsgemäßen Verfahrens und
- Figur 4:: eine schematische Darstellung des Motormomentes im Rahmen des erfindungsgemäßen Verfahrens.

### Ausführliche Beschreibung bevorzugter Ausführungsformen

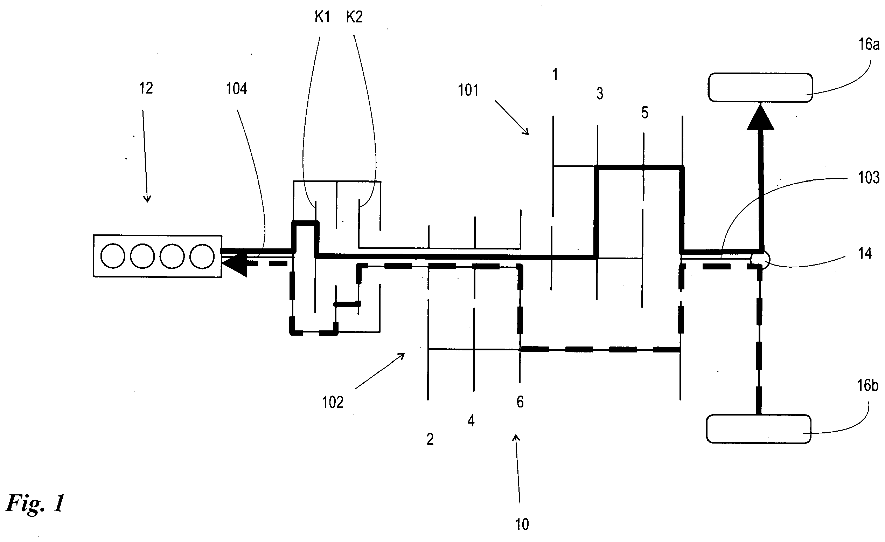

Figur 1 zeigt eine stark vereinfachte, rein schematische Darstellung des Antriebsstrangs eines Kraftfahrzeugs mit einfachem Doppelkupplungsgetriebe 10. Das Doppelkupplungsgetriebe 10 ist in konventioneller Bauweise zwischen einer Verbrennungskraftmaschine 12 und einem Abtrieb, von dem im Wesentlichen nur das Differential 14 sowie die Antriebsräder 16a, 16b gezeigt sind, angeordnet.

Das Doppelkupplungsgetriebe 10 umfasst ein erstes Teilgetriebe 101 und ein zweites Teilgetriebe 102. Jedes der Teilgetriebe 101, 102 umfasst eine Anzahl von Gangradpaarungen und ist mit der Getriebeausgangswelle 103 verbunden. Die Gangradpaarungen sind so verteilt, dass die "ungeraden Gänge", .d.h. die Fahrgangstufen 1, 3 und 5 dem ersten Teilgetriebe 101 und die "geraden Gänge", d.h. die Fahrgangstufen 2, 4 und 6, dem zweiten Teilgetriebe 102 zugehörig sind. Bei der stark vereinfachten Darstellung der Figur 1 ist keine gesonderte Rückwärts-Fahrgangstufe gezeigt, die üblicherweise vorhanden, für die vorliegende Erfindung jedoch nicht von Bedeutung ist. Selbstverständlich ist die Erfindung nicht auf Doppelkupplungsgetriebe mit sechs Vorwärts-Fahrgangstufen beschränkt. Moderne Antriebsstränge weisen heute in der Regel 7-gängige Doppelkupplungsgetriebe auf. Den Teilgetrieben 101, 102 vorgeschaltet ist eine Doppelkupplungsanordnung mit einer ersten Getriebekupplung K1, mittels welcher das erste Teilgetriebe 101 mit einer Getriebeingangswelle 104 koppelbar ist, sowie mit einer zweiten Getriebekupplung K2, mittels welcher das zweite Teilgetriebe 102 mit der Getriebeeingangswelle 104 koppelbar ist. Die Getriebeeingangswelle 104 ist mit der Kurbelwelle der Verbrennungskraftmaschine 12 verbunden.

Die in Figur 1 eingezeichneten, fett ausgezogenen Pfeillinien verdeutlichen den Momentenfluss während unterschiedlicher Phasen des erfindungsgemäßen Verfahrens. In der in Figur 1 oberen Hälfte der Zeichnung ist der Momentenfluss beim Fahrbetrieb in der dritten Fahrgangstufe als durchgezogene Pfeillinie dargestellt. In der in Figur 1 unteren Hälfte der Zeichnung ist der Momentenfluss während des Anschleppvorgangs als gestrichelte Pfeillinie dargestellt. Dies soll nachfolgend anhand eines speziellen Beispiels, welches für den Fachmann jedoch leicht verallgemeinerbar ist, erläutert werden.

Es sei angenommen, dass das Kraftfahrzeug in einer beliebigen Fahrgangstufe im verbrennungsmotorischen Fahrbetrieb betrieben werde. In dieser Betriebsart bewege sich das Kraftfahrzeug auf eine rote Ampel zu. Der Fahrer nimmt den Fuß vom Gas. Eine hier nicht näher beschriebene Steuereinheit registriert anhand verschiedener Messwerte, wie beispielsweise einer Zeitdauer während deren das Gaspedal nicht erneut betätigt wird, den Fahrerwunsch, das Fahrzeug ausrollen zu lassen. Die Steuereinheit aktiviert darauf eine Start/Stopp-Äutomatik, die aus Energiespargründen die Verbrennungskraftmaschine 12 abschaltet und gleichzeitig dafür sorgt, dass beide Getriebekupplungen K1 und K2 geöffnet sind. Der Begriff "gleichzeitig" ist dabei funktional zu verstehen und umfasst typischerweise eine Abstimmung zwischen den einzelnen Komponenten, um einen in der Fahrzeugkabine merkbaren Momentensprung zu vermeiden. Das Fahrzeug bewegt sich dann im Rollbetrieb, d.h. bei ausgeschalteter Verbrennungskraftmaschine 12 und geöffneten Kupplungen K1 und K2 auf die Ampel zu.

Im Rahmen des erläuterten Beispiels sei nun angenommen, die Ampel springe auf grün um, bevor das Kraftfahrzeug zum völligen Stillstand gekommen ist. Insbesondere habe das Fahrzeug noch eine Restgeschwindigkeit, bei der es im verbrennungsmotorischen Betrieb in der dritten Fahrgangstufe sinnvoll betrieben werden kann. Die dritte Fahrgangstufe wird somit von der Steuereinheit als vorgesehene Fahrgangstufe identifiziert, d.h. als diejenige Fahrgangstufe, in der das Kraftfahrzeug nach einem Neustart der Verbrennungskraftmaschine 12 im verbrennungsmotorischen Betrieb weiterbetrieben werden soll. Zu diesem Zeitpunkt kann - muss jedoch nicht - die dritte Fahrgangstufe im ersten Teilgetriebe 101 bereits eingelegt werden.

Zum Neustart der Verbrennungskraftmaschine 12 wird erfindungsgemäß die kinetische Energie des rollenden Kraftfahrzeugs verwendet. Hierzu wird zunächst dasjenige Teilgetriebe identifiziert, welches die vorgesehene Fahrgangstufe nicht enthält. Da die vorgesehene Fahrgangstufe die dritte Fahrgangstufe ist, handelt es sich bei dem zu identifizierenden Teilgetriebe um das zweite Teilgetriebe 102. In diesem wird nun die dortige höchste Fahrgangstufe, d.h. diejenige Fahrgangstufe mit der niedrigsten Übersetzung, eingelegt. Beim dargestellten Beispiel ist dies die sechste Fahrgangstufe. Anschließend wird durch Schließen der zweiten Getriebekupplung K2 die momentenübertragende Verbindung zur Verbrennungskraftmaschine 12 hergestellt. Der entsprechende Momentenfluss ist in Figur 1 mittels der fett ausgezogenen, gestrichelten Linie dargestellt. Von den Antriebsrädern 16a, 16b wird der Momentenfluss über das Differential 14 auf die Getriebeausgangswelle 103 übertragen. Eine Übersetzung erfolgt mittels der Gangradpaarung der sechsten Gangradstufe. An der Getriebeeingangswelle 104 wird durch das Schließen der Kupplung K2 somit eine Rotation mit vergleichsweise hohem Moment und niedriger Drehzahl angelegt. Wie erwähnt rollt das Kraftfahrzeug mit einer Geschwindigkeit, bei der eine Übersetzung der dritten Fahrgangstufe angemessen wäre. Mit einer solchen Übersetzung würde die Getriebeeingangswelle 104 mit einer Drehzahl drehen, die einer Fahrdrehzahl von mehreren Tausend U/min der Verbrennungskraftmaschine 12 entsprechen würde. Tatsächlich ist die Verbrennungskraftmaschine 12 jedoch, wie erläutert, über die sechste Fahrgangstufe an die Antriebsräder 16a, 16b angeschlossen. Die Getriebeeingangswelle 104 und damit die Kurbelwelle der Verbrennungskraftmaschine 12 wird also mit einer sehr niedrigen Drehzahl gedreht, die jedoch im Bereich der Mindeststartdrehzahl der Verbrennungskraftmaschine 12 liegt, d.h. hinreichend für einen Schleppstart der Verbrennungskraftmaschine 12 ist. Bei entsprechender Ansteuerung der Verbrennungskraftmaschine (Zündung, Einspritzung, Drosselklappe u.Ä.) kann die Verbrennungskraftmaschine so erneut gestartet werden.
Nach dem Neustart der Verbrennungskraftmaschine wird, wenn die Motordrehzahl gleich der oder höher als die Synchrondrehzahl der vorgesehenen Fahrgangstufe ist, durch geeignetes Kupplungsmanagement der Kupplungen K1 und K2, welches nachfolgend erläutert werden soll, das in der Verbrennungskraftmaschine 12 erzeugte Drehmoment auf das andere Teilgetriebe überblendet. Zu diesem Zeitpunkt muss spätestens die vorgesehene Fahrgangstufe auch tatsächlich eingelegt sein. Der entsprechende Momentenfluss ist in Figur 1 mittels der fett ausgezogenen, durchgezogenen Linie illustriert. Das Überblenden erfolgt im Wesentlichen durch ein Öffnen der zweiten Getriebekupplung K2 und ein abgestimmtes Schließen der ersten Getriebekupplung K1. In diesem Zustand läuft das Moment von der Verbrennungskraftmaschine 12 über die Getriebeeingangswelle 104 und die Kupplung K1 in das erste Teilgetriebe 101, wo es mittels der Gangradpaarung der dritten Fahrgangstufe übersetzt wird. An der Getriebeausgangswelle 103 bzw. an den Antriebsrädern 16a, 16b liegt somit Moment bei einer Drehzahl an, die zunächst der verbleibenden Rollgeschwindigkeit des Kraftfahrzeugs entspricht, wobei die Verbrennungskraftmaschine 12 mit ihrer Fahrdrehzahl von einigen Tausend U/min dreht. Diese stellt den herkömmlichen verbrennungsmotorischen Fahrbetrieb in der dritten Fahrgangstufe dar, von dem aus das Fahrzeug in üblicher Weise beschleunigt werden kann.

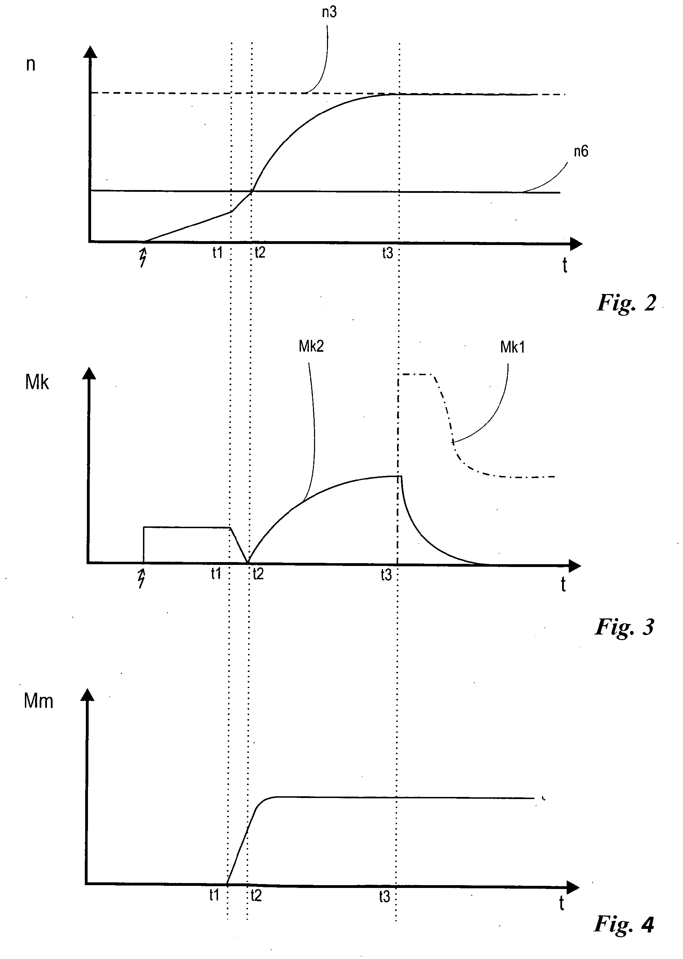

In den Figuren 2 bis 4 sind die Verläufe der Motordrehzahl n, der Kupplungsmomente Mk und des Motormomentes Mm gemäß einer bevorzugten Verfahrensvariante der vorliegenden Erfindung dargestellt. Figur 2 zeigt den Verlauf der Drehzahl n der Verbrennungskraftmaschine 12. Die durchgezogene horizontale Linie n6 symbolisiert dabei die Drehzahl, die sich bei Kopplung der Verbrennungskraftmaschine 12 mit den Antriebsrädern 16a, 16b über die sechste Gangstufe bei der aktuell vorliegenden Geschwindigkeit ergibt.
Die gestrichelt dargestellte horizontale Linie n3 repräsentiert diejenige Drehzahl, die sich bei Kopplung der Verbrennungskraftmaschine 12 mit den Antriebsrädern 16a, 16b über die dritte Gangstufe bei der aktuell vorliegenden Geschwindigkeit ergibt.
Das Fahrzeug befinde sich zunächst im Rollbetrieb. Zu einem gegebenen Zeitpunkt, in den Figuren 2 und 3 durch einen Blitz symbolisiert, ergehe ein Betriebsumschaltsignal, beispielsweise durch Gaspedalbetätigung durch den Fahrer. Zu diesem Zeitpunkt wird die Kupplung K2 des zweiten Teilgetriebes 102 geschlossen. Dies ist in Figur 3 an dem Momentensprung des Kupplungsmomentes der zweiten Getriebekupplung K2, symbolisiert durch die durchgezogene Linie Mk2, illustriert. Bis zum Zeitpunkt t1 wird dann die Drehzahl der Verbrennungskraftmaschine 12 langsam hochgezogen, bis die Verbrennungskraftmaschine 12 zum Zeitpunkt t1 zünden kann.
Nach dem Zünden wird die Verbrennungskraftmaschine 12 weiter bis zur Synchrondrehzahl n6, in der das Eingangs- und das Ausgangselement der zweiten Kupplung K2 keine Relativgeschwindigkeit zueinander mehr aufweisen, beschleunigt. Die kinetische Energie des Kraftfahrzeuges wird hierbei noch zur Unterstützung der Verbrennungskraftmaschine 12 genutzt. Allerdings wird diese Unterstützung durch schlupfendes Öffnen der zweiten Kupplung K2 bis zum Zeitpunkt t2, zu dem die Synchrondrehzahl n6 erreicht ist, allmählich abgebaut. Beim Erreichen der Synchrondrehzahl, d.h. in dem Moment, in dem ein Vorzeichenwechsel des Momentenübertrags eintritt, ist die zweite Kupplung K2 vollständig geöffnet.
Im Anschluss dreht die Verbrennungskraftmaschine 12 selbstständig weiter hoch, wird jedoch durch die sich schlupfend wieder schließende zweite Kupplung K2 soweit eingebremst, dass ein möglichst flüssiger, insbesondere asymptotischer Übergang auf die Synchrondrehzahl n3 erreicht wird. Bei dieser Drehzahl drehen das Eingangs- und das Ausgangselement der anderen Kupplung K1 ohne Drehzahldifferenz. Mit anderen Worten dreht die Verbrennungskraftmaschine 12 in diesem Zustand mit der Geschwindigkeit, mit der auch das erste Teilgetriebe 101 aufgrund der dort eingestellten dritten Gangstufe bei der gegebenen Geschwindigkeit der Antriebsräder 16a, 16b dreht. In diesem Zustand kann die erste Kupplung K1, wie in Figur 3 durch die strichpunktierte Linie Mk1 illustriert, abrupt geschlossen werden. Nach dem Schließen der Kupplung K1 kann Drehmoment von der Verbrennungskraftmaschine 12 über das erste Teilgetriebe 101 der dritten Fahrgangstufe auf die Antriebsräder geleitet und der verbrennungsmotorische Fahrbetrieb fortgesetzt werden. Das Kupplungsmoment der noch schlupfenden zweiten Kupplung K2 wird durch deren Öffnen vollständig abgebaut. Die Details dieses beschriebenen Kupplungsmanagements sind vorzugsweise so durchzuführen, dass, wie in Figur 4 gezeigt, das Motormoment Mm nach dem Starten der Verbrennungskraftmaschine 12 schnell aufgebaut und dann im Wesentlichen konstant gehalten wird.
Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere können Anzahl und Verteilung der Fahrgangstufen in dem Doppelkupplungsgetriebe 10 abweichend von der gezeigten Form gestaltet sein. Auch die Ausgestaltung der Steuerung mittels deren das erfindungsgemäße Verfahren durchgeführt wird, und die bevorzugt als ein oder mehrere elektronische Steuergeräte ausgeführt ist, kann vom Fachmann jeweils in Ansehung des Einzelfalls angepasst werden.

### Bezugszeichenliste

- 1-6: Gangstufen
- 10: Doppelkupplungsgetriebe
- 101: erstes Teilgetriebe von 10
- 102: zweites Teilgetriebe von 10
- 103: Getriebeausgangswelle
- 104: Getriebeeingangswelle
- 12: Verbrennungskraftmaschine
- 14: Differential
- 16a, b: Antriebsräder
- K1: Getriebekupplung von 101
- K2: Getriebekupplung von 102
- n: Drehzahl von 12
- n6: erste Synchrondrehzahl
- n3: zweite Synchrondrehzahl
- Mk1: Momentenverlauf von K1
- Mk2: Momentenverlauf von K2
- Mm: Momentenverlauf von 12

## Patentansprüche

1. Verfahren zum Betrieb eines Kraftfahrzeugs mit einer Verbrennungskraftmaschine (12) sowie einem zur Anwahl unterschiedlicher Gangstufen ausgelegten Getriebe (10), das eingangsseitig mittels wenigstens einer Kupplung (K1, K2) mit einer Ausgangswelle der Verbrennungskraftmaschine (12) und ausgangsseitig mit den Antriebsrädern (16a, b) des Kraftfahrzeugs gekoppelt ist,
wobei in einem Rollbetriebs des Kraftfahrzeugs, in dem das Kraftfahrzeug mit ausgeschalteter Verbrennungskraftmaschine (12) und geöffneter Kupplung (K1, K2) antriebsfrei rollt, die Verbrennungskraftmaschine (12) durch Schließen der Kupplung (K1; K2) angeschleppt und das Kraftfahrzeug in einen Fahrbetrieb mit einer vorbestimmten Fahrgangstufe (3) überführt wird, wobei das Getriebe (10) ausgebildet ist als ein Doppelkupplungsgetriebe mit einem ersten Teilgetriebe (101), welches einen ersten Satz von Gangstufen (1, 3, 5) enthält und mittels einer ersten Getriebekupplung (K1) mit einer Getriebeeingangswelle (14) gekoppelt ist, und mit einem zweiten Teilgetriebe, welches einen zweiten Satz von Gangstufen (2, 4, 6) enthält und mittels einer zweiten Getriebekupplung (K2) mit der Getriebeeingangswelle (14) gekoppelt ist, **dadurch gekennzeichnet, dass** zum Anschleppen der Verbrennungskraftmaschine (12) die Gangstufe (6) niedrigster Übersetzung desjenigen Teilgetriebes (102), welches die vorgesehene Fahrgangstufe (3) nicht enthält, als Anschleppgangstufe eingelegt und die zugeordnete Getriebekupplung (K2) geschlossen wird, während die Getriebekupplung (K1) des die vorgesehene Fahrgangstufe (3) enthaltenden Teilgetriebes (101) geöffnet ist.

2. Verfahren nach Anspruch 1,
**dadurch gekennzeichnet,**
**dass** nach dem Anschleppen der Verbrennungskraftmaschine (12) deren Moment (Mm) durch aufeinander abgestimmtes Öffnen und Schließen der Getriebekupplungen (K1, K2) von dem die Anschleppgangstufe (6) enthaltenden Teilgetriebe (102) auf das die vorgesehen Fahrgangstufe (3) enthaltende Teilgetriebe (101) überführt wird.

3. Verfahren nach Anspruch 2,
**gekennzeichnet durch**
die folgenden Schritte:
- Betreiben des Kraftfahrzeugs in einem verbrennungsmotorischen Fahrbetrieb, wobei eine aktuelle Fahrgangstufe (3) eingelegt, die Getriebekupplung (K1; K2) des eine aktuelle Fahrgangstufe enthaltenden Teilgetriebes (101; 102) geschlossen und die Getriebekupplung (K2; K1) des anderen Teilgetriebes (102; 101) geöffnet ist,
- Einleiten des Rollbetriebs durch Öffnen der Getriebekupplung (K1; K2) des die aktuelle Fahrgangstufe enthaltenden Teilgetriebes (101; 102) und Abschalten der Verbrennungskraftmaschine (12),
- Betreiben des Kraftfahrzeugs im Rollbetrieb bis zum Empfang eines Betriebsumschaltsignals,
- Nach Empfang des Betriebsumschaltsignals: Vorbereiten des Getriebes (10), sodass in dem einen der Teilgetriebe (101) die vorgesehene Fahrgangstufe (3) eingelegt oder einlegbar ist und in dem anderen der Teilgetriebe (102) dessen Fahrgangstufe (6) niedrigster Übersetzung als Anschleppgangstufe eingelegt ist,
- Schließen der Getriebekupplung (K2) des die Anschleppgangstufe (6) enthaltenden Teilgetriebes (102) zum Starten der Verbrennungskraftmaschine (12),
- Aufeinander abgestimmtes Öffnen der Getriebekupplung (K2) des die Anschleppgangstufe (6) enthaltenden Teilgetriebes (102) und Schließen der Getriebekupplung (K1) des die eingelegte vorgesehene Fahrgangstufe (3) enthaltenden Teilgetriebes (102).

4. Verfahren nach einem der vorangehenden Ansprüche,
**dadurch gekennzeichnet,**
**dass** die Getriebekupplung (K2) des die Anschleppgangstufe (6) enthaltenden Teilgetriebes (102) nach dem Starten der Verbrennungskraftmaschine (12) schlupfend geöffnet und die Drehzahl (n) der Verbrennungskraftmaschine (12) mindestens bis zu einer ersten Synchrondrehzahl (n6) mit dem die Anschleppgangstufe (6) enthaltenden Teilgetriebe (102) erhöht wird.

5. Verfahren nach Anspruch 4,
**dadurch gekennzeichnet,**
**dass** nach dem Erreichen der ersten Synchrondrehzahl (n6) die Getriebekupplung (K2) des die Anschleppgangstufe (6) enthaltenden Teilgetriebes (102) schlupfend geschlossen wird, sodass die Drehzahl (n) der Verbrennungskraftmaschine (102) auf eine zweite Synchrondrehzahl (n3) mit dem die vorgesehene Fahrgangstufe (3) enthaltenden Teilgetriebe (101) eingeregelt wird.

6. Verfahren nach Anspruch 5,
**dadurch gekennzeichnet,**
**dass** nach Erreichen der zweiten Synchrondrehzahl (n3) die Getriebekupplung (K1) des die vorgesehene Fahrstufe (3) enthaltenden Teilgetriebes (101) abrupt geschlossen wird.

7. Verfahren nach Anspruch 5,
**dadurch gekennzeichnet,**
**dass** nach Erreichen der zweiten Synchrondrehzahl (n3) die Getriebekupplung (K1) des die vorgesehene Fahrstufe (3) enthaltenden Teilgetriebes (101) langsam geschlossen wird.

8. Verfahren nach einem der Ansprüche 6 bis 7,
**dadurch gekennzeichnet,**
**dass** nach dem Schließen der Getriebekupplung (K1) des die vorgesehene Fahrgangstufe (3) enthaltenden Teilgetriebes (101) die Getriebekupplung (K2) des die Anschleppgangstufe (6) enthaltenden Teilgetriebes (102) schlupfend bis zur vollständigen Öffnung geöffnet wird.

9. Verfahren nach einem der vorangehenden Ansprüche,
**dadurch gekennzeichnet,**
**dass** im Fall, dass im Rollbetrieb des Kraftfahrzeugs dessen Rollgeschwindigkeit zu gering und/oder die Übersetzung der niedrigsten Gangstufe (5; 6) des die vorgesehene Fahrgangstufe nicht enthaltenden Teilgetriebes (101; 102) zu niedrig ist, um beim Anschleppen die Verbrennungskraftmaschine (12) bis zu deren Mindeststartdrehzahl zu beschleunigen, die Gangstufe zweitniedrigster Übersetzung (3; 4) des die vorgesehene Fahrgangstufe nicht enthaltenden Teilgetriebes (101; 102) als Anschleppgangstufe verwendet wird.

10. Verfahren nach einem der Ansprüche 1 bis 8,
**dadurch gekennzeichnet,**
**dass** im Fall, dass im Rollbetrieb des Kraftfahrzeugs dessen Rollgeschwindigkeit zu gering und/oder die Übersetzung der niedrigsten Gangstufe (5; 6) des die vorgesehene Fahrgangstufe nicht enthaltenden Teilgetriebes (101; 102) zu niedrig ist, um beim Anschleppen die Verbrennungskraftmaschine (12) bis zu deren Mindeststartdrehzahl zu beschleunigen, die Verbrennungskraftmaschine (12) bei geöffneter erster und zweiter Getriebekupplung (K1; K2) mittels eines elektrischen Anlassers gestartet wird.

## Claims

1. Method for operating a motor vehicle with an internal combustion engine (12) and a transmission (10) which is configured for the selection of different gears and is coupled on the input side to an output shaft of the internal combustion engine (12) by means of at least one clutch (K1, K2), and on the output side to the drive wheels (16a, b) of the motor vehicle,
wherein, in a rolling mode of the motor vehicle in which the motor vehicle rolls without drive with the internal combustion engine (12) switched off and the clutch (K1, K2) opened, the internal combustion engine (12) is tow-started by closing the clutch (K1; K2), and the motor vehicle is transferred into a driving mode with a predetermined drive position (3), wherein the transmission (10) is embodied as a double switch transmission with a first partial transmission (101) which contains a first set of gears (1, 3, 5) and is coupled to a transmission input shaft (14) by means of a first transmission clutch (K1), and with a second partial transmission which contains a second set of gears (2, 4, 6) and is coupled to the transmission input shaft (14) by means of a second transmission clutch (K2),
**characterized in that**
in order to tow-start the internal combustion engine (12) the gear (6) with the lowest transmission ratio of that partial transmission (102) which does not contain the provided drive position (3) is engaged as a tow-start gear and the assigned transmission clutch (K2) is closed, while the transmission clutch (K1) of the partial transmission (101) which contains the provided drive position (3) is opened.

2. Method according to Claim 1,
**characterized**
**in that** after the internal combustion engine (12) has been tow-started, the momentum (Mm) thereof is transferred from the partial transmission (102) containing the tow-start gear (6) to the partial transmission (101) containing the provided drive position (3) by coordinated opening and closing of the transmission clutches (K1, K2).

3. Method according to Claim 2,
**characterized by**
the following steps:
- operating the motor vehicle in an internal-combustion-engine drive mode, wherein a current drive position (3) is engaged, the transmission clutch (K1; K2) of the partial transmission (101; 102) containing a current drive position is closed, and the transmission clutch (K2; K1) of the other partial transmission (102; 101) is opened,
- initiating the rolling mode by opening the transmission clutch (K1; K2) of the partial transmission (101; 102) containing the current drive position, and switching off the internal combustion engine (12),
- operating the motor vehicle in the rolling mode until an operation switch-over signal is received,
- after reception of the operation switch-over signal: preparing the transmission (10), with the result that in one of the partial transmissions (101) the provided drive position (3) is engaged or can be engaged, and in the other of the partial transmissions (102) the drive position (6) thereof with the lowest transmission ratio is engaged as the tow-start gear,
- closing the transmission clutch (K2) of the partial transmission (102) containing the tow-start gear (6) in order to start the internal combustion engine (12),
- coordinated opening of the transmission clutch (K2) of the partial transmission (102) containing the tow-start gear (6) and the closing of the transmission clutch (K1) of the partial transmission (102) containing the engaged provided drive position (3).

4. Method according to one of the preceding claims,
**characterized**
**in that** the transmission clutch (K2) of the partial transmission (102) containing the tow-start gear (6) is opened in slipping fashion after the starting of the internal combustion engine (12), and the rotational speed (n) of the internal combustion engine (12) is increased at least as far as a first synchronization rotational speed (n6) with the partial transmission (102) containing the tow-start gear (6).

5. Method according to Claim 4,
**characterized**
**in that** after the first synchronization rotational speed (n6) has been reached, the transmission clutch (K2) of the partial transmission (102) containing the tow-start gear (6) is closed in a slipping fashion, with the result that the rotational speed (n) of the internal combustion engine (102) is adjusted to a second synchronization rotational speed (n3) with the partial transmission (101) containing the provided drive position (3).

6. Method according to Claim 5,
**characterized**
**in that** after the second synchronization rotational speed (n3) has been reached, the transmission clutch (K1) of the partial transmission (101) containing the provided drive position (3) is abruptly closed.

7. Method according to Claim 5,
**characterized**
**in that** after the second synchronization rotational speed (n3) has been reached, the transmission clutch (K1) of the partial transmission (101) containing the provided drive position (3) is slowly closed.

8. Method according to one of Claims 6 to 7,
**characterized**
**in that** after the transmission clutch (K1) of the partial transmission (101) containing the provided drive position (3) has closed, the transmission clutch (K2) of the partial transmission (102) containing the tow-start gear (6) is opened in a slipping fashion until it is opened completely.

9. Method according to one of the preceding claims,
**characterized**
**in that** if the rolling speed of the motor vehicle in the rolling mode is too low and/or the transmission ratio of the lowest gear (5; 6) of the partial transmission (101; 102) not containing the provided drive position is too low to accelerate the internal combustion engine (12) to its minimum starting rotational speed during tow-starting, the gear with the second lowest transmission ratio (3; 4) of the partial transmission (101; 102) not containing the provided drive position is used as the tow-start gear.

10. Method according to one of Claims 1 to 8,
**characterized**
**in that** if the rolling speed of the motor vehicle in the rolling mode is too low and/or the transmission ratio of the lowest gear (5; 6) of the partial transmission (101; 102) not containing the provided drive position is too low to accelerate the internal combustion engine (12) to its minimum starting rotational speed during tow-starting, the internal combustion engine (12) is started by means of an electric starter with the first and second transmission clutches (K1; K2) opened.

## Revendications

1. Procédé permettant de faire fonctionner un véhicule automobile avec un moteur à combustion interne (12) ainsi qu'avec une boîte de vitesses (10) conçue pour la sélection de différents rapports de vitesse, qui est couplée à l'entrée au moyen d'au moins un embrayage (K1, K2) à un arbre de sortie du moteur à combustion interne (12) et à la sortie aux roues motrices (16a, b) du véhicule automobile,
dans lequel dans un fonctionnement de roulage libre du véhicule automobile, dans lequel le véhicule automobile roule librement sans entraînement avec le moteur à combustion interne (12) coupé et avec l'embrayage (K1, K2) ouvert, on lance le moteur à combustion interne (12) par fermeture de l'embrayage (K1, K2) et on amène le véhicule automobile dans un état de roulage avec un rapport de vitesse prédéterminé (3),
dans lequel la boîte de vitesses (10) est réalisée sous la forme d'une boîte de vitesses à double embrayage avec une première boîte de vitesses partielle (101), qui comporte un premier ensemble de rapports de vitesse (1, 3, 5) et qui est couplée à un arbre d'entrée de boîte de vitesses (14) au moyen d'un premier embrayage de boîte de vitesses (K1), et avec une deuxième boîte de vitesses partielle, qui comporte un deuxième ensemble de rapports de vitesse (2, 4, 6) et qui est couplée à l'arbre d'entrée de boîte de vitesses (14) au moyen d'un deuxième embrayage de boîte de vitesses (K2),
**caractérisé en ce que** pour le lancement du moteur à combustion interne (12), on engage le rapport de vitesse (6) de la plus basse démultiplication de la boîte de vitesses partielle (102), qui ne comporte pas le rapport de vitesse prévu (3), comme rapport de lancement et on ferme l'embrayage de boîte de vitesses associé (K2), tandis que l'embrayage de boîte de vitesses (K1) de la boîte de vitesses partielle (101) comportant le rapport de vitesse prévu (3) est ouvert.

2. Procédé selon la revendication 1, **caractérisé en ce qu'**après le lancement du moteur à combustion interne (12), on transmet son couple (Mm) par ouverture et fermeture accordées l'une à l'autre des embrayages de boîte de vitesses (K1, K2) depuis la boîte de vitesses partielle (102) comportant le rapport de vitesse de lancement (6) à la boîte de vitesses partielle (101) comportant le rapport de vitesse de roulage prévu (3).

3. Procédé selon la revendication 2, **caractérisé par** les étapes suivantes:
- faire fonctionner le véhicule automobile dans un mode de roulage avec moteur à combustion, dans lequel un rapport de vitesse actuel (3) est engagé, l'embrayage de boîte de vitesses (K1; K2) de la boîte de vitesses partielle (101; 102) comportant le rapport de vitesse actuel est fermé et l'embrayage de boîte de vitesses (K2; K1) de l'autre boîte de vitesses partielle (102; 101) est ouvert,
- introduire le fonctionnement de roulage libre par ouverture de l'embrayage de boîte de vitesses (K1; K2) de la boîte de vitesses partielle (101; 102) comportant le rapport de vitesse actuel et arrêt du moteur à combustion interne (12),
- faire fonctionner le véhicule automobile en mode de roulage libre jusqu'à la réception d'un signal de commutation de fonctionnement,
- après réception du signal de commutation de fonctionnement: préparer la boîte de vitesses (10) de telle manière que le rapport de vitesse prévu (3) soit ou puisse être engagé dans une des boîtes de vitesses partielles (101) et que dans l'autre des boîtes de vitesses partielles (102) son rapport de vitesse de roulage avec la plus basse démultiplication soit engagé comme rapport de vitesse de lancement (6),
- fermer l'embrayage de boîte de vitesses (K2) de la boîte de vitesses partielle (102) comportant le rapport de vitesse de lancement (6) pour faire démarrer le moteur à combustion interne (12),
- ouvrir l'embrayage de boîte de vitesses (K2) de la boîte de vitesses partielle (102) comportant le rapport de vitesse de lancement (6) et fermer l'embrayage de boîte de vitesses (K1) de la boîte de vitesses partielle (102) comportant le rapport de vitesse de roulage prévu engagé (3) de manière accordée l'une avec l'autre.

4. Procédé selon l'une quelconque des revendications précédentes, **caractérisé en ce que** l'on ouvre progressivement l'embrayage de boîte de vitesses (K2) de la boîte de vitesses partielle (102) comportant le rapport de vitesse de lancement (6) après le démarrage du moteur à combustion interne (12) et on augmente le nombre de tours (n) du moteur à combustion interne (12) au moins jusqu'à un premier nombre de tours de synchronisation (n6) avec la boîte de vitesses partielle (102) comportant le rapport de vitesse de lancement (6).

5. Procédé selon la revendication 4, **caractérisé en ce qu'**après avoir atteint le premier nombre de tours de synchronisation (n6) on ferme progressivement l'embrayage de boîte de vitesses (K2) de la boîte de vitesses partielle (102) comportant le rapport de vitesse de lancement (6), de telle manière que le nombre de tours (n) du moteur à combustion interne (102) soit réglé sur un deuxième nombre de tours de synchronisation (n3) avec la boîte de vitesses partielle (101) comportant le rapport de vitesse de roulage prévu (3).

6. Procédé selon la revendication 5, **caractérisé en ce qu'**après avoir atteint le deuxième nombre de tours de synchronisation (n3) on ferme brusquement l'embrayage de boîte de vitesses (K1) de la boîte de vitesses partielle (101) comportant le rapport de vitesse prévu (3).

7. Procédé selon la revendication 5, **caractérisé en ce qu'**après avoir atteint le deuxième nombre de tours de synchronisation (n3) on ferme lentement l'embrayage de boîte de vitesses (K1) de la boîte de vitesses partielle (101) comportant le rapport de vitesse de roulage prévu (3).

8. Procédé selon une des revendications 6 à 7, **caractérisé en ce qu'**après avoir fermé l'embrayage de boîte de vitesses (K1) de la boîte de vitesses partielle (101) comportant le rapport de vitesse de roulage prévu (3), on ouvre progressivement l'embrayage de boîte de vitesses (K2) de la boîte de vitesses partielle (102) comportant le rapport de vitesse de lancement (6) jusqu'à son ouverture complète.

9. Procédé selon l'une quelconque des revendications précédentes, **caractérisé en ce que**, dans le cas où, dans le fonctionnement en roulage libre du véhicule automobile, sa vitesse de roulage libre est trop faible et/ou la démultiplication du rapport de vitesse le plus bas (5; 6) de la boîte de vitesses partielle (101; 102) ne comportant pas le rapport de vitesse de roulage prévu est trop basse, pour accélérer lors du lancement le moteur à combustion interne (12) jusqu'à son nombre de tours minimum de démarrage, on utilise le rapport de vitesse de la deuxième plus basse démultiplication (3; 4) de la boîte de vitesses partielle (101; 102) ne comportant pas le rapport de vitesse de roulage prévu comme rapport de vitesse de lancement.

10. Procédé selon l'une quelconque des revendications 1 à 8, **caractérisé en ce que**, dans le cas où, dans le fonctionnement en roulage libre du véhicule automobile, sa vitesse de roulage libre est trop faible et/ou la démultiplication du rapport de vitesse le plus bas (5; 6) de la boîte de vitesses partielle (101; 102) ne comportant pas le rapport de vitesse de roulage prévu est trop basse, pour accélérer lors du lancement le moteur à combustion interne (12) jusqu'à son nombre de tours minimum de démarrage, on fait démarrer le moteur à combustion interne (12) au moyen d'un démarreur électrique avec le premier et le deuxième embrayages de boîte de vitesses (K1; K2) ouverts.
